# FASCICULE DE BREVET EUROPEEN

(11) **EP 3 827 186 B1**
(45) Date de publication et mention de la délivrance du brevet: **31.08.2022**
(21) Numéro de dépôt: 19753184.1
(22) Date de dépôt: 22.07.2019
(51) Int. Cl.: F16H 57/08, F16H 57/04, F02C 7/36

(54) **REDUCTEUR DE VITESSE A TRAIN PLANETAIRE OU EPICYCLOIDAL POUR TURBOMACHINE**
PLANETENGETRIEBE FÜR GASTURBINE
PLANETARY GEAR REDUCER FOR GAS TURBINE

(30) Priorité: 26.07.2018 FR 1856982
(43) Date de publication de la demande: 02.06.2021
(73) Titulaire: Safran Transmission Systems, 92700 Colombes (FR)
(72) Inventeur: DI GIOVANNI, Jean-Charles, Michel, Pierre, 77550 MOISSY-CRAMAYEL (FR)
(74) Mandataire: Gevers & Orès
(86) Numéro de dépôt international: PCT/FR2019/051819
(87) Numéro de publication internationale: WO 2020/021188

(56) Documents cités:
- FR-A1- 2 853 382
- FR-A1- 3 052 213
- US-A1- 2014 087 907
- US-B1- 8 939 714

## Description

### Domaine de l'invention

La présente invention concerne le domaine des réducteurs de vitesse à train planétaire ou à train épicycloïdal pour turbomachine en particulier d'aéronef.

### Etat de la technique

L'état de l'art comprend notamment les documents WO-A1-2010/092263, FR-A1-2 987 416, EP-A1-1 464 869, US-A1-2014/087907, FR-A1-3 052 213, FR-A1-2 853 382 et US-B1-8,939,714 et FR-A1-3 041 054.

Le rôle d'un réducteur mécanique est de modifier le rapport de vitesse et le couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
∘ Sur un réducteur planétaire, le porte-satellites est fixe et la couronne constitue l'arbre de sortie du dispositif qui tourne dans le sens inverse du solaire.
∘ Sur un réducteur épicycloïdal, la couronne est fixe et le porte-satellites constitue l'arbre de sortie du dispositif qui tourne dans le même sens que le solaire.
∘ Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champ magnétique.

Il existe plusieurs types d'engrènement par contact comme avec des dentures droites ou en chevron.

Le porte-satellites peut se présenter sous la forme d'une cage dans laquelle sont logés le solaire, les satellites, les paliers de guidage des satellites ainsi que des moyens de lubrification des satellites et du solaire. Le solaire comprend des cannelures internes d'accouplement à un premier arbre de la turbomachine et la cage du porte-satellites est solidaire d'un porte-cage qui comprend une portion cylindrique comportant des cannelures externes d'accouplement à un autre arbre.

La liaison de la cage au porte-cage est en général rigide. En variante, on peut envisager une technologie dans laquelle la cage est reliée au porte-cage par des liaisons souples, telles que décrites dans le document EP-A1-1 464 869. Dans un tel cas, le porte-cage comprend une rangée annulaire de doigts axiaux qui sont reliés par des liaisons souples à la cage.

On a proposé de réaliser ces liaisons souples par des rotules, les doigts portant des rotules traversées par des broches cylindriques s'étendant dans des logements prévus à la périphérie de la cage.

En fonctionnement, lors de la mise sous couple du porte-satellites, les doigts vont fléchir et transmettre le couple à la cage. Les rotules permettent de ne pas transmettre le fléchissement des doigts aux broches. Cependant, pour des questions de montage, des jeux sont présents entre les broches et les rotules. Ainsi, lors des déformations, des déplacements relatifs entre les broches et les rotules apparaissent. Ces déplacements relatifs sur des interfaces métal / métal génèrent des usures par frottement (du type *fretting*), ce qui peut mener à la rupture des liaisons.

Par ailleurs, dans la technique actuelle, les moyens de lubrification du réducteur ne sont pas jugés satisfaisants pour lubrifier efficacement les engrènements et en particulier ceux entre les satellites et la couronne. Pour des raisons de montage et d'accessibilité, il est en effet difficile d'amener de l'huile jusqu'à ces engrènements.

La présente invention propose un perfectionnement qui apporte une solution simple, efficace et économique à au moins une partie des problèmes évoqués ci-dessus.

### Exposé de l'invention

L'invention concerne un réducteur de vitesse à train planétaire ou épicycloïdal pour turbomachine, ce réducteur ayant un axe X et comportant :
- un porte-cage comportant une rangée annulaire de doigt axiaux, chaque doigt comportant un évidement de montage d'un moyen de liaison, et
- une cage de porte-satellites, cette cage contenant un solaire central d'axe X de rotation et une rangée annulaire de satellites disposés autour de l'axe X et engrenés avec ledit solaire ainsi qu'avec une couronne du réducteur destinée à entourer la cage, la cage comportant à sa périphérie des logements axiaux dans lesquels sont engagés les doigts axiaux solidaires du porte-cage, chaque logement étant traversé par une broche sensiblement radiale qui est destinée à guider en rotation ledit moyen de liaison qui est porté par un desdits doigts et qui est traversé par ladite broche, caractérisé en ce que les broches comprennent des moyens de projection d'huile de lubrification dans des zones d'engrènement des satellites avec ladite couronne.

Le réducteur selon l'invention peut comprendre les caractéristiques suivantes:
- les broches comprennent en outre des moyens de lubrification dudit moyen de liaison ; il est proposé ainsi d'amener de l'huile jusqu'aux rotules ou paliers et en particulier aux interfaces moyen de liaison / broche, de façon à lubrifier leurs surfaces en contact et ainsi limiter l'apparition de *fretting* ; les moyens de lubrification sont avantageusement intégrés dans les broches de guidage ;
- chaque broche est formée d'une seule pièce avec une collerette de fixation à la cage, cette collerette comportant au moins un bossage et/ou au moins un prolongement dans le(s)quel(s) sont formés lesdits moyens de projection ; les broches de guidage sont ainsi faciles à réaliser et relativement économiques ; le fait qu'elle soit réalisée d'une seule pièce permet de réduire l'encombrement radial et également de simplifier leur montage ;
- ladite collerette est située à une extrémité radialement interne ou externe de la broche ; elle peut ainsi être montée sur la cage par l'intérieur ou bien par l'extérieur ;
- ladite collerette comprend un prolongement formant une patte de fixation et percé d'un orifice de passage d'une vis destinée à être vissée dans un orifice taraudé de la cage, et par exemple dans un orifice taraudé d'un pontet intérieur ou extérieur de la cage ; ceci permet d'orienter correctement les jets d'huile sur les zones d'engrènement ;
- chaque broche comprend un alésage central de circulation d'huile relié à une extrémité radialement externe à une extrémité d'au moins un canal de projection d'huile, ce canal étant orienté dans une direction prédéterminée de façon à assurer la projection d'huile dans une des zones précitées ; les moyens de projection sont ainsi formés simplement par des alésages et canaux prévus dans les broches de guidage ;
- au moins un canal et de préférence deux canaux de projection d'huile sont reliés à l'extrémité radialement externe dudit alésage central ; les canaux sont de préférence dirigés vers le milieu de chaque hélice de l'engrènement ; le nombre de canaux ainsi que leur orientation sont déterminés en fonction des besoins pour assurer une lubrification optimale des engrènements satellites / couronne ; chaque canal de projection d'huile peut être assimilé à un gicleur ; on peut donc associer un ou deux voire plus gicleurs par broche de guidage, ce qui est avantageux ;
- lesdits au moins deux canaux sont sensiblement rectilignes et inclinés l'un par rapport à l'autre de façon à former un V dont la pointe correspond à un point d'intersection des canaux et de raccordement audit alésage ; l'angle entre les canaux ainsi que leur longueur peuvent être ajustés pour optimiser la lubrification ;
- chaque broche comprend au moins un canal relié audit alésage central et s'étendant entre ledit alésage central et une surface cylindrique externe de la broche destinée à être entourée par ledit moyen de liaison ; les moyens de lubrification sont ainsi formés simplement par des alésages et canaux prévus dans les broches de guidage ;
- la cage comprend une rangée annulaire d'organes de raccordement qui lui sont fixés et qui sont chacun destinés à être interposés entre deux satellites adjacents, chaque organe comportant un circuit d'huile comportant une entrée d'huile destinée à être reliée à des moyens d'alimentation en huile, et une sortie d'huile qui est alignée avec une extrémité radialement interne dudit alésage central et qui est raccordée à cette extrémité par une douille tubulaire ; on comprend ainsi que les broches de guidage ne sont pas alimentés en huile par des gicleurs mais par des organes d'amenée d'huile, ce qui permet de garantir une bonne alimentation en huile des broches et d'éviter la perte d'huile en fonctionnement ;
- chacun desdits organes s'étend axialement entre deux parois radiales de la cage et comprend deux surfaces latérales opposées concaves destinées à s'étendre en partie autour des satellites entre lesquels l'organe est monté ; chaque organe a ainsi une forme adaptée pour son montage dans la cage, entre deux satellites adjacents ; il occupe donc un espace non utilisé de la technique antérieure et permet, par ses surfaces incurvées, de guider l'huile en fonctionnement au plus proche des dentures des satellites ;
- chacun desdits organes s'étend radialement entre le solaire et une paroi périphérique externe de la cage dans laquelle sont formés lesdits logements ; comme dans le cas précité, l'organe s'étend au plus près du solaire et maintient l'huile en fonctionnement au plus proche de sa denture ;
- ladite collerette comprend un bossage dans lequel sont formés lesdits moyens de projection d'huile ;
- ladite collerette comprend des prolongements dans lesquels s'étendent lesdits moyens de projection d'huile ;
- le bossage est en saillie sur la collerette et a une forme générale triangulaire s'étendant sensiblement depuis un axe de la broche jusqu'à des extrémités libres des prolongements ;
- des extrémités longitudinales des moyens de projection d'huile débouchent chacun dans un lamage circulaire prévu à une extrémité libre de chaque prolongement.

La présente invention concerne encore une turbomachine, en particulier d'aéronef, comportant un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :
- la figure 1 est une vue schématique en coupe axiale d'une turbomachine utilisant l'invention,
- la figure 2 est une vue schématique en coupe axiale d'un réducteur à train épicycloïdal,
- la figure 3 est une vue en perspective d'un ensemble cage et porte-cage formant le porte-satellites d'un réducteur,
- la figure 4 est une vue en coupe axiale et partielle d'une partie du porte-satellites de la figure 3,
- la figure 5 est une vue de détail de la figure 4
- la figure 6 est une vue en coupe axiale, d'un réducteur selon l'invention,
- la figure 7 est une vue en coupe transversale et partielle, du réducteur de la figure 6,
- la figure 8 est une vue du dessus partielle du réducteur de la figure 6, avec une broche coupée par un plan passant par les axes de deux canaux de projection d'huile,
- les figures 9a et 9b sont des vues en perspective d'une broche du réducteur de la figure 6,
- la figure 10 est une vue en perspective d'un ensemble cage et porte-cage formant le porte-satellites d'un réducteur,
- la figure 11 est une vue en coupe axiale du porte-satellites de la figure 10, et
- la figure 12 est une vue à plus grande échelle d'un détail de la figure 11.

### Description détaillée d'un mode de réalisation de l'invention

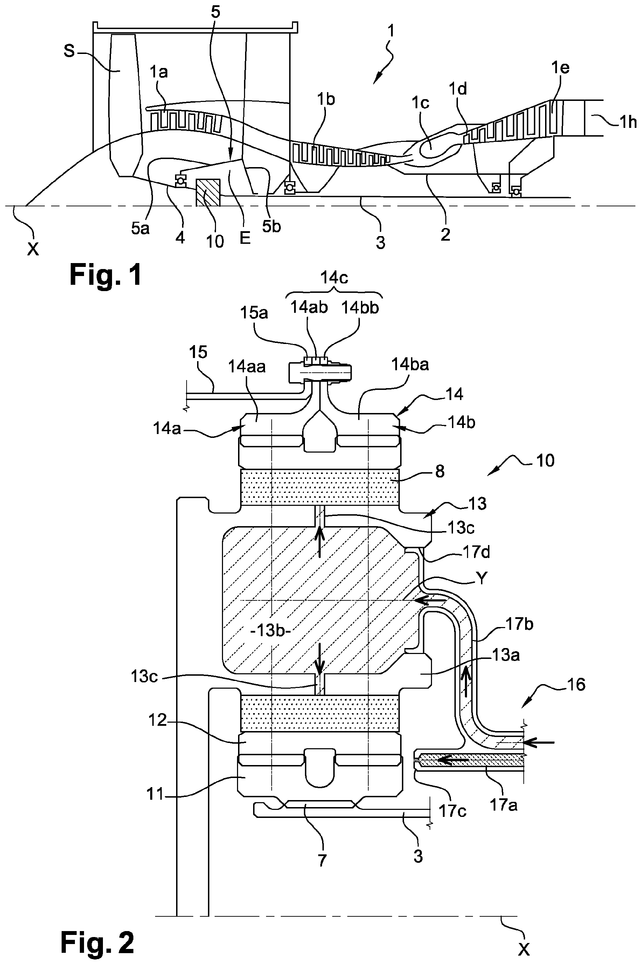

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est relié à l'arbre BP 3 au moyen d'un réducteur 10. Ce réducteur est généralement de type planétaire ou épicycloïdal.

Bien que la description qui suit concerne un réducteur du type planétaire ou épicycloïdal, elle s'applique également à un différentiel mécanique dans lequel ses trois composants essentiels, que sont le porte-satellites, la couronne et le solaire, sont mobiles en rotation, la vitesse de rotation de l'un de ces composants dépendant notamment de la différence de vitesses des deux autres composants.

Le réducteur 10 est positionné dans la partie avant de la turbomachine. Une structure fixe comportant schématiquement, ici, une partie amont 5a et une partie aval 5b qui compose le carter moteur ou stator 5 est agencée de manière à former une enceinte E entourant le réducteur 10. Cette enceinte E est ici fermée en amont par des joints au niveau d'un palier permettant la traversée de l'arbre de soufflante 4, et en aval par des joints au niveau de la traversée de l'arbre BP 3.

La figure 2 montre une partie d'un réducteur 10 qui peut prendre la forme de différentes architectures selon si certaines pièces sont fixes ou en rotation. En entrée, le réducteur 10 est relié à l'arbre BP 3, par exemple par l'intermédiaire de cannelures 7. Ainsi, l'arbre BP 3 entraîne un pignon planétaire appelé le solaire 11. Classiquement, le solaire 11 dont l'axe de rotation est confondu avec l'axe X de la turbomachine, entraîne une série de pignons appelés satellites 12, qui sont équirépartis sur le même diamètre autour de l'axe de rotation X. Ce diamètre est égal au double de l'entraxe de fonctionnement entre solaire 11 et satellites 12. Le nombre de satellites 12 est généralement défini entre trois et sept pour ce type d'application.

L'ensemble des satellites 12 est maintenus par un châssis appelé porte-satellites 13. Chaque satellite 12 tourne autour de son propre axe Y, et engrène avec la couronne 14.

En sortie du réducteur 10, nous avons :
∘ Dans une configuration épicycloïdale, l'ensemble des satellites 12 entraine en rotation le porte-satellite 13 autour de l'axe X de la turbomachine. La couronne 14 est fixée au carter moteur ou stator 5 via un porte-couronne 15 et le porte-satellites 13 est fixé à l'arbre de soufflante 4.
∘ Dans une configuration planétaire, l'ensemble des satellites 12 est maintenu par un porte-satellites 13 qui est fixé au carter moteur ou stator 5. Chaque satellite entraine la couronne qui est rapportée à l'arbre de soufflante 4 via un porte-couronne 15.

Chaque satellite 12 est monté libre en rotation à l'aide d'un palier 8, par exemple de type roulement ou palier hydrostatique. Chaque palier 8 est monté sur un des axes 13a du porte-satellites 13 et tous les axes sont positionnés les uns par rapport aux autres à l'aide d'un ou plusieurs châssis structurels du porte-satellites 13. Il existe un nombre d'axes et de paliers égal au nombre de satellites. Pour des raisons de fonctionnement, de montage, de fabrication, de contrôle, de réparation ou de rechange les axes 13a et le châssis peuvent être séparés en plusieurs pièces.

Pour les mêmes raisons citées précédemment, la denture d'un réducteur peut être séparée en plusieurs hélices. Dans notre exemple nous détaillons le fonctionnement d'un réducteur 10 à plusieurs hélices avec une couronne séparée en deux demi-couronnes:
∘ Une demi-couronne avant 14a constituée d'une jante 14aa et d'une demi-bride de fixation 14ab. Sur la jante 14aa se trouve l'hélice avant de la denture du réducteur. Cette hélice avant engrène avec celle du satellite 12 qui engrène avec celle du solaire 11.
∘ Une demi-couronne arrière 14b constituée d'une jante 14ba et d'une demi-bride de fixation 14bb. Sur la jante 14ba se trouve l'hélice arrière de la denture du réducteur. Cette hélice arrière engrène avec celle du satellite 12 qui engrène avec celle du solaire 11.

La demi-bride de fixation 14ab de la couronne avant 14a et la demi-bride de fixation 14bb de la couronne arrière 14b forment la bride de fixation 14c de la couronne. La couronne 14 est fixée au porte-couronne 15 en assemblant la bride de fixation 14c de la couronne et la bride de fixation 15a du porte-couronne à l'aide d'un montage boulonné par exemple. Dans ce qui suit, une demi-bride pourra être appelée une bride.

Les flèches de la figure 2 décrivent l'acheminement de l'huile dans le réducteur 10. L'huile arrive dans le réducteur 10 depuis la partie stator 5 dans le distributeur 16 par différents moyens qui ne seront pas précisés dans cette vue car ils sont spécifiques à un ou plusieurs types d'architecture. Le distributeur 16 est séparé en deux parties en général chacune répétée du même nombre de satellites. Les injecteurs 17a ont pour fonction de lubrifier les dentures, et les bras 17b ont pour fonction de lubrifier les paliers 8. L'huile est amenée vers l'injecteur 17a pour ressortir par l'extrémité 17c afin de lubrifier les dentures. L'huile est également amenée vers chaque bras 17b et circule via la bouche d'alimentation 17d du palier 8. L'huile circule ensuite à travers l'axe 13a dans une ou des zones tampons 13b pour ensuite ressortir par des orifices 13c afin de lubrifier les paliers 8 des satellites.

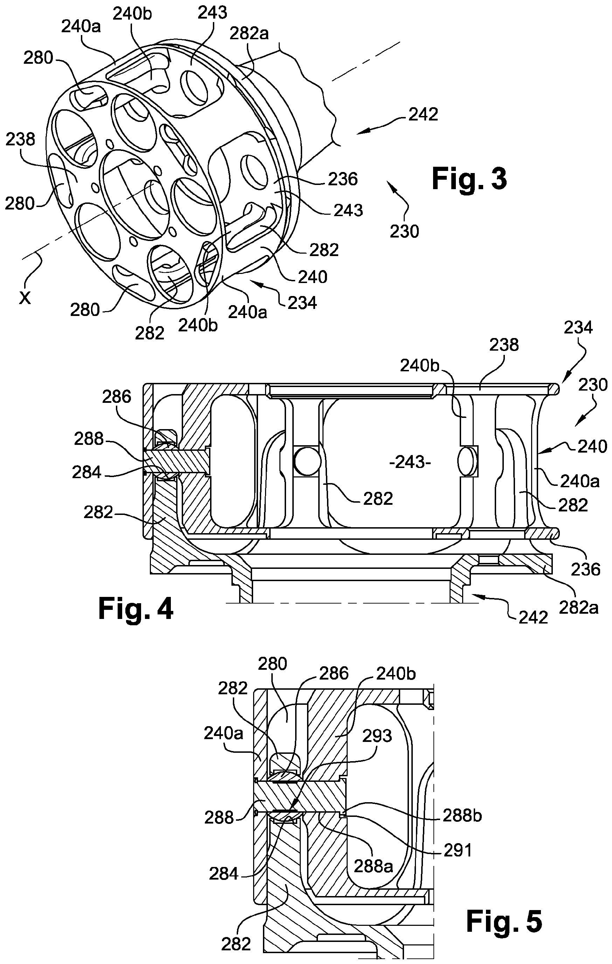

Dans les figures 3 et suivantes, les éléments déjà décrits dans ce qui précède sont désignés par les mêmes références augmentées d'une centaine.

Les figures 3 à 5 représentent une autre technologie de porte-satellites 230, ce porte-satellites comportant une cage 234 et un porte-cage 242 reliés par des liaisons à rotules.

La paroi cylindrique 240 de la cage 234 est ici du type à double peau et comprend une peau externe 240a interrompue par les lumières 243 et une peau interne 240b interrompue par les mêmes lumières 243. La peau externe 240a séparée par cinq lumières 243 forme cinq pontets extérieurs et la peau interne 240b séparée par cinq lumières 243 forme cinq pontets intérieurs. Chaque couple de pontets inférieur et supérieur forment une chape pour accueillir le doigt 282 du porte-cage 242. Autrement dit, les pontets de chaque couple définissent entre eux un logement 280 de réception d'un doigt du porte-cage. Les pontets assurent la liaison structurelle entre les parois 236 et 238. Des lumières 280 de forme oblongue sont réalisées dans au moins une des parois 236 et 238 de telle sorte à laisser passer le doigt 282 entre les pontets intérieur et extérieur.

La paroi cylindrique 240 de la cage comprend ainsi une rangée annulaire de logements 280. Ces logements 280 reçoivent les doigts axiaux 282 solidaires d'une paroi annulaire 282a sensiblement radiale du porte-cage 242. La paroi 282a est située à une extrémité axiale du porte-cage 242. Les doigts 282 s'étendent axialement depuis la paroi 282a et sont engagés par translation axiale dans les logements 280.

L'épaisseur et la largeur ou la section radiale des doigts 282, des pontets, ainsi que le diamètre des broches, sont déterminés par calcul. L'espace restant est au mieux occupé entre chaque satellite en maîtrisant les rapports épaisseur/largeur. Les lumières 280 ne sont que la résultante et ont la même largeur que l'espace laissé entre les pontets extérieur et intérieur.

Chaque doigt 282 comprend, sensiblement en son milieu, un évidement 284 de montage de la rotule 286 destinée à être traversé par une broche cylindrique 288 portée par la cage 234.

L'évidement 284 a une orientation sensiblement radiale par rapport à l'axe X. Il a une forme générale cylindrique. La cage 234 et la rotule 286 ont une épaisseur, mesurée dans une direction radiale par rapport à l'axe X, qui est inférieure à la distance inter-pontets ou l'épaisseur radiale de la lumière oblongue 280, de façon à pouvoir être engagées dans ce logement concomitamment avec le doigt 282 de support de ces pièces.

Chaque logement 280 est traversé par une broche 288 qui a une orientation sensiblement radiale par rapport à l'axe X. Chaque broche 288 comporte un corps cylindrique 288a reliée à une extrémité axiale, ici radialement interne, à une collerette 288b. La broche288 est ici engagé par translation radiale depuis l'extérieur à travers des orifices radiaux des pontets 240a, 240b, sa collerette 288b étant destiné à venir en appui radial sur une face plane 291 du pontet extérieur de la cage 234. Après insertion de la broche 288 dans les orifices des pontets, jusqu'à mise en appui de la collerette 288b sur le pontet extérieur, la collerette 288b est fixée à ce pontet par exemple par vissage.

Comme on le voit à la figure 5, la rotule 286 entoure une surface cylindrique 293 de la broche 288 qui peut faire l'objet de *fretting* en fonctionnement.

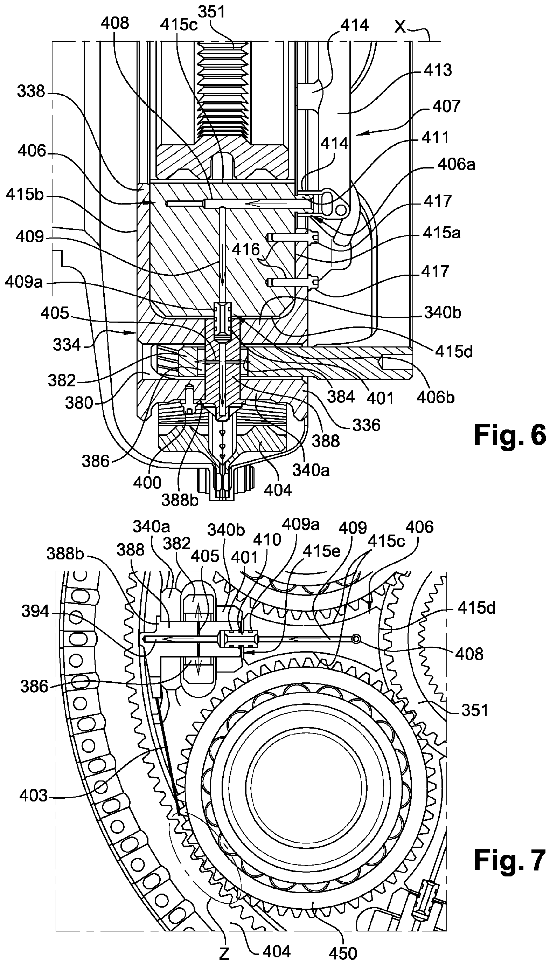

Les figures 6 à 9b représentent un mode de réalisation de l'invention dans lequel la broche 388 comprend à la fois des moyens de projection d'huile et des moyens de lubrification. En variante, il pourrait comprendre seulement des moyens de projection d'huile.

Dans ce mode de réalisation, la rotule montée autour de la broche 388 est remplacée par un palier lisse 386 sensiblement tubulaire. Chaque doigt 382 comprend, sensiblement en son milieu, un évidement 384 de montage d'un palier 386 destiné à être traversé par la broche 388 portée par la cage 334.

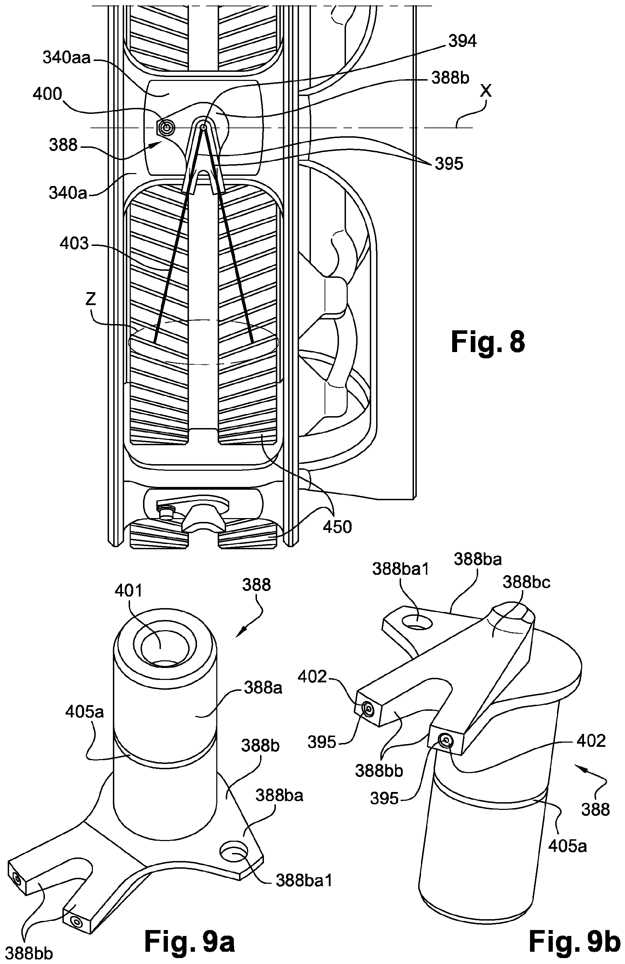

Comme décrit précédemment, chaque logement 380 est traversé par la broche 388 qui a une orientation sensiblement radiale par rapport à l'axe X (figures 6, 9a et 9b). Chaque broche 388 comporte un corps cylindrique 388a relié à une extrémité axiale, ici radialement externe, à un rebord annulaire externe ou une collerette 388b. La broche 388 est ici engagée par translation radiale depuis l'extérieur à travers des orifices radiaux des pontets 340a, 340b, sa collerette 388b étant destinée à venir en appui radial sur une surface radialement externe 340aa du ponter extérieur 340a (figure 8). L'extrémité axiale opposée du corps cylindrique 388a de la broche est libre et affleure une surface radialement interne du ponter intérieur 340b (figures 6 et 7).

Comme cela est visible aux figures 9a et 9b, la collerette 388b de chaque broche 388 comprend un prolongement 388ba formant une patte de fixation et percé d'un orifice 388ba1 pour le passage d'une vis 400. La vis s'étend dans une direction sensiblement radiale et est vissée depuis l'extérieur dans un orifice taraudé du pontet extérieur 340a (cf. figures 6 et 8).

Après insertion de la broche 388 dans les orifices des peaux, jusqu'à mise en appui de la collerette 388b sur le pontet extérieur 340a, la vis 400 est engagée et vissée dans les orifices de la collerette et de la peau pour fixer la broche à la cage. La figure 8 montre que la collerette 388b prend appui sur la surface 340aa du pontet extérieur, qui est ici plane et sensiblement tangente à une circonférence centrée sur l'axe X.

La broche 388 comprend un alésage central 394 de circulation d'huile qui s'étend sensiblement le long de l'axe de la broche. L'alésage 394 est relié à son extrémité radialement interne à une cavité cylindrique coaxiale 401 de plus grand diamètre et à son extrémité radialement externe à au moins un canal 395 de projection d'huile.

Dans l'exemple représenté, les canaux 395 sont au nombre de deux. Chaque canal est rectiligne et les canaux forment ensemble un V, comme cela est visible à la figure 8 notamment, dans laquelle une coupe a été réalisée pour visualiser ces canaux.

Comme cela est visible aux figures 9a et 9b, la collerette 388b comprend des prolongements 388bb supplémentaires et un bossage 388bc dans lesquels sont formés les canaux 395. La forme en V précitée a sa pointe qui est située au niveau de l'axe de la broche et qui correspond au point d'intersection des canaux et de raccordement à l'alésage 394. Les prolongements 388bb s'étendent respectivement le long des canaux et forment les branches du V. Le bossage 388bc est en saillie sur la collerette 388b et a une forme générale triangulaire s'étendant sensiblement depuis l'axe de la broche jusqu'aux extrémités des prolongements 388bb.

Les canaux 395 ont une forme générale cylindrique dont les diamètres sont inférieurs à ceux de l'alésage 394 (figure 8). Leurs extrémités longitudinales, situées du côté opposé à l'alésage, peuvent chacune déboucher dans un lamage circulaire 402 prévu à l'extrémité libre de chaque prolongement 388bb et destiné par exemple à faciliter la formation du jet d'huile en sortie du canal (figure 9b).

Les traits 403 aux figures 7 et 8 représentent schématiquement les trajectoires des jets d'huile sortant des canaux 395. Ces trajectoires dépendent notamment de l'orientation des canaux. Les points d'impact des jets d'huile sont ici situés dans des zones Z d'engrènement des satellites 450 avec la couronne 404 (figures 7 et 8). Dans l'exemple représenté, chaque jet d'huile est orienté sur une des hélices d'un satellite. Dans notre exemple, le jet est de préférence orienté de telle sorte à viser l'intersection des diamètres de tête des satellites et de la couronne tout en étant tangent à celui du satellite.

En plus des moyens de projection d'huile, les broches 388 comportent chacun des moyens de lubrification des paliers 386. Pour cela, l'alésage 394 est relié sensiblement en son milieu à au moins un canal 405 qui s'étend sensiblement radialement par rapport à l'axe de la broche et débouche sur la surface cylindrique externe de la broche qui est entourée par le palier 386 (figures 6 et 7). Dans l'exemple représenté, les canaux 405 débouchent à leurs extrémités radialement externes dans une rainure annulaire périphérique 405a du corps de la broche 388 (figures 9a et 9b). L'intégration à la broche 388 des moyens de lubrification du palier 386 permet de limiter le phénomène de *fretting* évoqué ci-dessus.

Avantageusement, la broche 388 est associée à des moyens de fixation et d'orientation pour des jets d'huile. Dans l'exemple représenté, c'est la vis 400 qui assure ces deux fonctions car elle maintient la broche et donc les canaux 395 dans une position angulaire prédéterminée autour de l'axe de la broche. En variante, cette fonction pourrait être assurée par un pion, un méplat, etc.

Dans une autre variante non représentée, la collerette 388b pourrait être située à l'extrémité radialement interne de chaque broche 388 qui serait ainsi montée sur la cage par l'intérieur de celle-ci. Sa collerette 388b serait alors fixée sur le pontet intérieur au moyen de la vis 400.

Les figures 6 à 8 permettent de comprendre le cheminement de l'huile jusqu'à la broche 388.

En ce qui concerne l'alimentation en huile des broches 388, une rangée annulaire d'organes de raccordement 406 sont fixés à la cage et sont chacun destinés à être interposés entre deux satellites 450 adjacents pour assurer l'amenée d'huile jusqu'à la broche située entre ces satellites (figures 6 et 7). Il y a ainsi autant d'organes 406 que de broches 388 à alimenter en huile. En variante, ces organes de raccordement 406 pourraient faire partie intégrante de la cage.

Chaque organe 406 comporte un circuit d'huile comportant une entrée d'huile 406a destinée à être reliée à des moyens 407 d'alimentation en huile, et une sortie d'huile 406b qui est alignée avec la cavité 401 et l'alésage 394 de la broche correspondante. Dans l'exemple représenté, ce circuit comprend deux conduites rectilignes, une première conduite 408 orientée axialement (c'est-à-dire parallèle à l'axe X) qui est borgne à une extrémité et débouche à son extrémité opposée sur une face, ici avant, de l'organe, et une seconde conduite 409 orientée radialement par rapport à l'axe X et qui s'étend entre la première conduite 408 et une cavité coaxiale 409a située en regard de la cavité 401 de la broche 388. Cette cavité 409a forme la sortie d'huile 406b précitée.

Une douille tubulaire 410 est engagée à étanchéité (par exemple au moyen de joints toriques) dans les cavités 401 et 409a et assure le raccordement de l'alésage 394 de la broche au circuit d'huile de l'organe 406 ainsi que l'étanchéité entre les deux pièces. Au niveau de l'entrée 406a du circuit, l'organe comprend un port tubulaire 411 en saillie sur la face avant qui prolonge la conduite 408 et est raccordé aux moyens 407 d'alimentation en huile. Ces moyens d'alimentation 407 peuvent comprendre une rampe annulaire 416 raccordée à une source d'huile de lubrification et comportant une rangée annulaire de raccords 414 emboîtés sur les ports 411 des différents organes 406. La rampe 416 s'étend ici autour de l'axe X et est située en avant de la cage du réducteur. Des joints toriques d'étanchéité peuvent également être prévus entre les ports 411 et les raccords 414 de la rampe 413.

Chaque organe 406 est de préférence conçu pour occuper un espace non utilisé dans la technique antérieure à l'intérieur de la cage et pour optimiser par sa forme le guidage de l'huile en fonctionnement. Dans l'exemple représenté, il a une forme générale parallélépipédique dont deux faces opposées sont incurvées concaves. L'organe 406 comprend ainsi :
- deux faces, respectivement avant 415a et arrière 415b, sensiblement planes et radiales et destinées à être situées au plus près des faces internes en regard des parois annulaires 336, 338 de la cage (figure 6),
- deux faces latérales incurvées concaves 415c destinées à faire face à deux satellites adjacents, respectivement, et à entourer en partie ces satellites, au plus près de ceux-ci (figure 7), et
- deux faces, respectivement radialement interne 415d et radialement externe 415e (figure 7).

La face radialement interne 415d peut être incurvée concave, comme cela est visible à la figure 7, et s'étendre en partie autour du solaire 351 et à proximité de celui-ci. La face radialement externe 415e est de préférence plane et située au plus près de la surface radialement interne du pontet intérieur. La cavité 409a débouche sur cette face 415e pour recevoir la douille 410. Le port 411 est situé sur la face avant 415a qui comprend en outre des orifices taraudés 416 de vissage de vis 417 pour la fixation de l'organe à la cage. Ces vis 417 traversent des orifices de la paroi annulaire avant 336 de la cage (figure 6). L'organe 406 est fixé en appui sur la face 415a sur la paroi 336 de la cage. Il existe un jeu entre la paroi 338 de la cage et la face 415b de l'organe.

Dans une variante de réalisation non représenté, les organes 406 pourraient être formés d'une seule pièce avec la cage. Dans encore une autre variante, les liaisons à rotule 286 et à palier 386 pourraient être remplacées par un autre type de liaison souple.

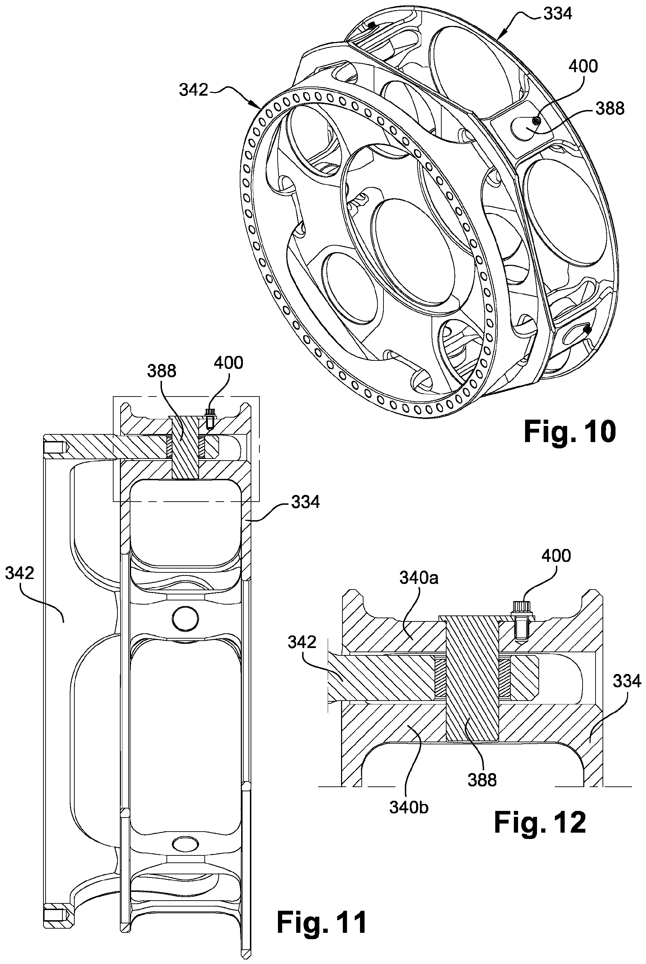

Bien que le porte-satellite visible aux figures 10 à 12 n'illustre pas les caractéristiques de l'invention relatives aux moyens de projection d'huile des broches 388, elles permettent de bien visualiser les formes et la coopération de la cage 334 et du porte-cage 342 de ce porte-satellites, ainsi que notamment la fixation des broches 388 sur les pontets 340a, 340b de la cage au moyen des vis 400.

## Revendications

1. Réducteur de vitesse (10) à train planétaire ou épicycloïdal pour turbomachine, ce réducteur ayant un axe X et comportant :
- un porte-cage comportant une rangée annulaire de doigt axiaux (382), chaque doigt comportant un évidement (384) de montage d'un moyen de liaison, et
- une cage (334) de porte-satellites, cette cage contenant un solaire central (351) d'axe X de rotation et une rangée annulaire de satellites (450) disposés autour de l'axe X et engrenés avec ledit solaire ainsi qu'avec une couronne (404) du réducteur destinée à entourer la cage, la cage comportant à sa périphérie des logements axiaux (380) dans lesquels sont engagés les doigts axiaux (382) solidaires du porte-cage, chaque logement étant traversé par une broche (388) sensiblement radiale qui est destinée à guider en rotation ledit moyen de liaison qui est porté par un desdits doigts et qui est traversé par ladite broche (388), **caractérisé en ce que** les broches comprennent des moyens (395) de projection d'huile de lubrification dans des zones (Z) d'engrènement des satellites avec ladite couronne.

2. Réducteur (10) selon la revendication précédente, dans lequel les broches (388) comprennent en outre des moyens (405) de lubrification dudit moyen de liaison.

3. Réducteur (10) selon l'une des revendications précédentes, dans lequel chaque broche (388) est formée d'une seule pièce avec une collerette (388b) de fixation à la cage, cette collerette comportant au moins un bossage (388bc) et/ou au moins un prolongement (388bb) dans le(s)quel(s) sont formés lesdits moyens de projection (395).

4. Réducteur (10) selon la revendication 3, dans lequel ladite collerette (388b) est située à une extrémité radialement interne ou externe de la broche (388).

5. Réducteur (10) selon la revendication 3 ou 4, dans lequel ladite collerette (388b) comprend un prolongement (388ba) formant une patte de fixation et percé d'un orifice (388ba1) de passage d'une vis (400) destinée à être vissée dans un orifice taraudé de la cage.

6. Réducteur (10) selon l'une des revendications 3 à 5, dans lequel ladite collerette (388b) comprend un bossage (388bc) dans lequel sont formés lesdits moyens (395) de projection d'huile.

7. Réducteur (10) selon la revendication précédente, dans lequel ladite collerette (388b) comprend des prolongements (388bb) dans lesquels s'étendent lesdits moyens (395) de projection d'huile.

8. Réducteur (10) selon la revendication précédente, dans lequel le bossage (388bc) est en saillie sur la collerette (388b) et a une forme générale triangulaire s'étendant sensiblement depuis un axe de la broche (388) jusqu'à des extrémités libres des prolongements (388bb).

9. Réducteur (10) selon la revendication 7 ou 8, dans lequel des extrémités longitudinales des moyens (395) de projection d'huile débouchent chacun dans un lamage circulaire (402) prévu à une extrémité libre de chaque prolongement (388bb).

10. Réducteur (10) selon l'une des revendications 1 à 9, dans lequel chaque broche (388) comprend un alésage central (394) de circulation d'huile relié à une extrémité radialement externe à une extrémité d'au moins un canal (395) de projection d'huile, ce canal étant orienté dans une direction prédéterminée de façon à assurer la projection d'huile dans une des zones (Z) précitées.

11. Réducteur (10) selon la revendication précédente, dans lequel au moins deux canaux (395) de projection d'huile sont reliés à l'extrémité radialement externe dudit alésage central (394).

12. Réducteur (10) selon la revendication précédente, dans lequel lesdits au moins deux canaux (395) sont sensiblement rectilignes et inclinés l'un par rapport à l'autre de façon à former un V dont la pointe correspond à un point d'intersection des canaux et de raccordement audit alésage (394).

13. Réducteur (10) selon l'une des revendications 10 à 12, dans lequel elle comprend une rangée annulaire d'organes de raccordement (406) qui sont fixés à la cage et qui sont chacun destinés à être interposés entre deux satellites (450) adjacents, chaque organe comportant un circuit d'huile comportant une entrée d'huile (406a) destinée à être reliée à des moyens (407) d'alimentation en huile, et une sortie d'huile (406b) qui est alignée avec une extrémité radialement interne dudit alésage central (394) et qui est raccordée à cette extrémité par une douille tubulaire (410)

14. Réducteur (10) selon la revendication précédente, dans lequel chacun desdits organes (406) s'étend axialement entre deux parois radiales (336, 338) de la cage et comprend deux surfaces latérales opposées (415c) concaves destinées à s'étendre en partie autour des satellites (450) entre lesquels l'organe est monté.

15. Réducteur (10) selon la revendication 13 ou 14, dans lequel chacun desdits organes (406) s'étend radialement entre le solaire (351) et une paroi périphérique externe de la cage dans laquelle sont formés lesdits logements (380).

16. Turbomachine, en particulier d'aéronef, comportant un réducteur (10) selon l'une des revendications précédentes.

## Patentansprüche

1. Untersetzungsgetriebe (10) mit Planeten- oder Epizykloidalgetriebe für eine Turbomaschine, wobei dieses Getriebe eine Achse X aufweist und umfasst:
- einen Käfigträger, der eine ringförmige Reihe von axialen Fingern (382) umfasst, wobei jeder Finger eine Aushöhlung (384) zur Montage eines Verbindungsmittels umfasst, und
- einen Planetenträgerkäfig (334), wobei dieser Käfig ein zentrales Sonnenrad (351) mit Drehachse X und einer ringförmigen Reihe von Satelliten (450), die um die Achse X angeordnet sind und in das Sonnenrad eingreifen, sowie eine Krone (404) des Getriebes, die dazu vorgesehen ist, den Käfig zu umgeben, enthält.
wobei der Käfig an seinem Umfang axiale Aufnahmen (380) umfasst, in denen die mit dem Käfigträger fest verbundenen, axialen Finger (382) eingreifen, wobei jede Aufnahme von einer im Wesentlichen radialen Spindel (388) durchkreuzt wird, die dazu vorgesehen ist, das von einem der Finger getragene und von der Spindel (388) durchkreuzte Verbindungsmittel bei einer Drehung zu führen, **dadurch gekennzeichnet, dass** die Spindeln Mittel (395) zur Projektion von Schmieröl in die Eingreifbereiche (Z) der Satelliten mit der Krone umfassen.

2. Getriebe (10) nach dem vorstehenden Anspruch, wobei die Spindeln (388) weiter Mittel (405) zum Schmieren des Verbindungsmittels umfassen.

3. Getriebe (10) nach einem der vorstehenden Ansprüche, wobei jede Spindel (388) aus einem einzigen Stück mit einem Kragen (388b) zum Befestigen am Käfig umfasst, wobei dieser Kragen mindestens einen Vorsprung (388bc) und/oder mindestens eine Verlängerung (388b) umfasst, in der (denen) die Projektionsmittel (395) gebildet sind.

4. Getriebe (10) nach Anspruch 3, wobei der Kragen (388b) an einem radial inneren oder äußeren Ende der Spindel (388) liegt.

5. Getriebe (10) nach Anspruch 3 oder 4, wobei der Kragen (388b) eine Verlängerung (388ba) umfasst, die eine Befestigungslasche bildet und von einer Durchgangsöffnung (388ba1) für eine Schraube (400) durchbohrt ist, die dazu vorgesehen ist, in eine Gewindeöffnung des Käfigs geschraubt zu werden.

6. Getriebe (10) nach einem der Ansprüche 3 bis 5, wobei der Kragen (388b) einen Vorsprung (388bc) umfasst, in dem die Ölprojektionsmittel (395) gebildet sind.

7. Getriebe (10) nach dem vorstehenden Anspruch, wobei der Kragen (388b) Verlängerungen (388bb) umfasst, in denen sich die Ölprojektionsmittel (395) erstrecken.

8. Getriebe (10) nach dem vorstehenden Anspruch, wobei der Vorsprung (388bc) auf dem Kragen (388b) vorragt und eine allgemeine dreieckige Form aufweist, die sich ausgehend von einer Achse der Spindel (388) bis zu freien Enden der Verlängerungen (388bb) erstreckt.

9. Getriebe (10) nach Anspruch 7 oder 8, wobei Längsenden der Ölprojektionsmittel (395) jeweils in eine kreisförmige Absenkung (402) münden, die an einem freien Ende jeder Verlängerung (388bb) bereitgestellt ist.

10. Getriebe (10) nach einem der Ansprüche 1 bis 9, wobei jede Spindel (388) eine mittlere Bohrung (394) zur Zirkulation von Öl umfasst, die mit einem radial äußeren Ende an einem Ende mindestens eines Ölprojektionskanals (395) verbunden ist, wobei dieser Kanal derart in einer vorbestimmte Richtung ausgerichtet ist, dass die Projektion von Öl in einem der oben genannten Bereiche (Z) sichergestellt wird.

11. Getriebe (10) nach dem vorstehenden Anspruch, wobei mindestens zwei Ölprojektionskanäle (395) mit dem radial äußeren Ende der mittleren Bohrung (394) verbunden sind.

12. Getriebe (10) nach dem vorstehenden Anspruch, wobei die mindestens zwei Kanäle (395) im Wesentlichen geradlinig und in Bezug aufeinander derart geneigt sind, dass sie ein V bilden, dessen Spitze einem Schnittpunkt der Kanäle und des Anschlusses an die Bohrung (394) entspricht.

13. Getriebe (10) nach einem der Ansprüche 10 bis 12, wobei sie eine ringförmige Reihe von Anschlussorganen (406) umfasst, die am Käfig befestigt sind und die jeweils dazu vorgesehen sind, zwischen zwei benachbarten Satelliten (450) eingefügt zu werden, wobei jedes Organ einen Ölkreis umfasst, umfassend einen Öleingang (406a), der dazu vorgesehen ist, mit Ölversorgungsmitteln (407) verbunden zu werden, und einen Ölausgang (406b), der mit einem radial inneren Ende der mittleren Bohrung (394) ausgerichtet ist und der über eine rohrförmige Buchse (410) an dieses Ende angeschlossen ist.

14. Getriebe (10) nach dem vorstehenden Anspruch, wobei sich jedes der Organe (406) axial zwischen zwei radialen Wänden (336, 338) des Käfigs erstreckt und zwei gegenüberliegende konkave Seitenflächen (415c) umfasst, die dazu vorgesehen sind, sich teilweise um die Satelliten (450) zu erstrecken, zwischen denen das Organ montiert ist.

15. Getriebe (10) nach Anspruch 13 oder 14, wobei sich jedes der Organe (406) radial zwischen dem Sonnenrad (351) und einer äußeren Umfangswand des Käfigs erstreckt, in der die Aufnahmen (380) gebildet sind.

16. Turbomaschine, insbesondere Flugzeug, umfassend ein Getriebe (10) nach einem der vorstehenden Ansprüche.

## Claims

1. A speed reducer (10) with a planetary or epicyclic gear set for a turbomachine, this reducer having an axis X and comprising:
- a cage carrier comprising an annular row of axial fingers (382), each finger comprising a recess (384) for mounting a connecting means, and
- a planet carrier cage (334), this cage containing a central sun gear (351) with an axis X of rotation and an annular row of planet gears (450) arranged around the axis X and meshed with said sun gear as well as with a ring gear (404) of the speed reducer intended to surround the cage, the cage comprising at its periphery axial housings (380) in which are engaged the axial fingers (382) integral with the cage carrier, each housing being traversed by a substantially radial pin (388) which is intended to guide in rotation said connecting means which is carried by one of said fingers and which is traversed by said pin (388), **characterised in that** the pins comprise means (395) for spraying lubricating oil into areas (Z) in which the planet gears mesh with said ring gear.

2. The reducer (10) according to the preceding claim, wherein the pins (388) further comprise means (405) for lubricating said connecting means.

3. The reducer (10) according to one of the preceding claims, wherein each pin (388) is formed in one piece with a collar (388b) for fixing to the cage, this collar comprising at least one boss (388bc) and/or at least one extension (388bb) in which said spraying means (395) are formed.

4. The reducer (10) according to claim 3, wherein said collar (388b) is located at a radially inner or outer end of the pin (388).

5. The reducer (10) according to claim 3 or 4, wherein said collar (388b) comprises an extension (388ba) forming a bracket and pierced with a hole (388ba1) for the passage of a screw (400) intended to be screwed into a threaded hole of the cage.

6. The reducer (10) according to one of claims 3 to 5, wherein said collar (388b) comprises a boss (388bc) in which said oil spraying means (395) are formed.

7. The reducer (10) according to the preceding claim, wherein said collar (388b) comprises extensions (388bb) into which said oil spraying means (395) extend.

8. The reducer (10) according to the preceding claim, wherein the boss (388bc) protrudes from the collar (388b) and has a generally triangular shape extending substantially from an axis of the pin (388) to free ends of the extensions (388bb).

9. The reducer (10) according to claim 7 or 8, wherein longitudinal ends of the oil spraying means (395) each lead to a circular counterbore (402) provided at a free end of each extension (388bb).

10. The reducer (10) according to one of claims 1 to 9, wherein each pin (388) comprises a central bore (394) of oil circulation connected at a radially outer end to one end of at least one oil spraying channel (395), this channel being oriented in a predetermined direction so as to ensure the spraying of oil into one of the aforementioned areas (Z).

11. The reducer (10) according to the preceding claim, wherein at least two oil spraying channels (395) are connected to the radially outer end of said central bore (394).

12. The reducer (10) according to the preceding claim, wherein said at least two channels (395) are substantially straight and inclined with respect to each other so as to form a V whose tip corresponds to a point of intersection of the channels and connection to said bore (394).

13. The reducer (10) according to one of claims 10 to 12, wherein it comprises an annular row of connecting members (406) which are fixed to the cage and which are each intended to be interposed between two adjacent planet gears (450), each member comprising an oil circuit comprising an oil inlet (406a) for connection to oil supply means (407), and an oil outlet (406b) which is aligned with a radially inner end of said central bore (394) and which is connected to that end by a tubular bushing (410)

14. The reducer (10) according to the preceding claim, wherein each of said members (406) extends axially between two radial walls (336, 338) of the cage and comprises two opposed concave lateral surfaces (415c) intended to extend partly around the planet gears (450) between which the member is mounted.

15. The reducer (10) according to claim 13 or 14, wherein each of said members (406) extends radially between the sun gear (351) and an outer peripheral wall of the cage in which said housings (380) are formed.

16. A turbomachine, in particular an aircraft, comprising a reducer (10) according to one of the preceding claims.
